# EUROPEAN PATENT APPLICATION

(11) **EP 4 357 609 A1**
(43) Date of publication of application: **24.04.2024**
(21) Application number: 22202687.4
(22) Date of filing: 20.10.2022
(51) Int. Cl.: F03D 7/02, F03D 7/04, F03D 9/25, H02J 3/38

(54) **OPERATING WIND TURBINES IN A MICROGRID**

(71) Applicant: Siemens Gamesa Renewable Energy A/S, 7330 Brande (DK)
(72) Inventor: Andersen, Claus, 7400 Herning (DK); Stoettrup, Michael, 7400 Herning (DK)
(74) Representative: SGRE-Association

(57) **Abstract**

It is described a method of operating plural wind turbines (2a,2b,2c) connected to a local grid (4) but isolated from any power providing utility grid (5), the method comprising: monitoring (6a,6b,6c) the wind turbines (2a,2b,2c) regarding at least one temporary stop requirement; selecting one or more of the wind turbines (2a,2b,2c) based on a closeness to the respective temporary stop requirement, in particular the lower the closeness the more urgent the temporary stop; entering, by at least one selected wind turbine (2a,2b) or by at least one non-selected wind turbine, a non-idle state thereby suppling power to the local grid.

## Description

### Field of invention

The present invention relates to a method of operating plural wind turbines connected to a local grid but isolated from any power providing utility grid and further relates to a corresponding arrangement. Still further, the present invention relates to a system comprising at least two wind turbines and the arrangement.

### Art Background

One example of an isolated local grid may be an offshore wind park when the electrical connection to the onshore electrical network is interrupted. When the offshore electrical grid is started up, several wind turbines will produce electric power (active or reactive power) to help support the consumers, for example other wind turbines, in the small electrical local grid while the wind speed may allow the turbines to produce electrical power. The balance between electrical power production and power consumption must always be maintained in the electrical local grid. Otherwise, the frequency will either be increasing or decreasing until the local grid collapses.

There may be a need for a method and a corresponding arrangement of operating plural wind turbines connected to a local grid but isolated from any power providing utility grid, wherein the stability of the local grid may be improved and where performance of the local grid may be improved, such that in particular it is enabled to efficiently operate the local grid and in particular to start up the needed number of wind turbines even in the isolated state disconnected from any energy providing utility grid and/or to support also idle wind turbines regarding temporary stops.

### Summary of the Invention

This need may be met by the subject matter according to the independent claims. Advantageous embodiments of the present invention are described by the dependent claims.

According to an embodiment of the present invention it is provided a method of operating plural wind turbines connected to a local grid but isolated from any power providing utility grid, the method comprising monitoring the wind turbines regarding at least one temporary stop requirement; selecting one or more of the wind turbines based on a closeness to the respective temporary stops, in particular the lower the closeness the more urgent temporary stops; entering, by at least one selected wind turbine or by at least one non-selected wind turbine, a non-idle state thereby suppling power to the local grid.

The plural wind turbines may comprise two or more wind turbines, in particular a subset of a wind park or an entire wind park. Each of the plural wind turbines are directly or indirectly connected to each other within the local grid. The local grid may for example be operated at a medium voltage range, such as for example between 20 kV and 200 kV. The local grid is disconnected from any power providing utility grid such that the local grid does not receive any electrical power from any power providing utility grid. In this sense, the local grid is isolated or islanded.

The method may be implemented in software and/or hardware and may be performed by one or more units involving for example one or more of the plural wind turbines, for example a control unit or a control portion which has processing capabilities for executing at least the selection step. The control portion may also be communicatively connected to the wind turbines in order to send respective operation control signals for commanding the wind turbines to either enter an idle state or a non-idle state.

The control portion may also be communicatively connected to the wind turbines in order to receive monitoring data regarding the respective temporary stop requirements of the respective wind turbines. Thus, monitoring the wind turbines may involve receiving measurement data and/or configuration data and/or operational state data from one or more, in particular all, of the plural wind turbines. The monitoring data may comprise sensor data and/or historic operational data and/or operational state data of the respective wind turbines. The monitoring data may further comprise one or more thresholds defining operational limits with respect to remaining operating time, elapsed operating time, elapsed operating capacity, remaining operating capacity and so forth.

The control unit may process the monitoring data in order to derive a closeness, in particular a closeness level (as explained below in detail) which indicates how close ("distance") the respective wind turbine is to a respective temporary stop requirement. The closeness may be expressed in different units or may be expressed as a closeness level or closeness score being for example without any physical unit. In one example, the closeness is expressed in the unit of a time. The closeness may be predicted from the monitoring data thereby also for example considering an expected lifetime or expected operational capacity of one or more of the components of the wind turbines. For example, from historic operational data it might then be predicted when each of the plural wind turbines require the next temporary stop. The closeness could also be based on deterministic temporary stop periods, e.g. caused by lubrication of components. Determining the closeness may further allow to derive a ranking of the wind turbines regarding urgency of required temporary stop.

The temporary stop may be required e.g. due to a regular or conditional maintenance service to be performed at at least one component of the wind turbine.

The selection step may either select those wind turbines which are to enter a non-idle state or those wind turbines which are to enter an idle state based on the closeness. In one embodiment, those wind turbines are selected based on the closeness to the respective temporary stop requirements that are to enter the non-idle state in order to provide or supply electrical power into the local grid. In particular, those wind turbines may be selected for entering the non-idle state for which the temporary stop is farthest away in the future or is at least expected to be farthest away in the future. Thus, those selected wind turbines are expected to not require a temporary stop at least in a predetermined time range in the future such that they are capable of supplying electrical energy to the local grid. In this embodiment, the non-selected wind turbines are to enter the idle state or to remain or stay in the idle state, since for those non-selected wind turbines, the temporary stop may be more urgent or may be required in the near future. When the selected wind turbine or several of the selected wind turbines enter the non-idle state it may involve to starting up those wind turbines in order to for example direct the rotor into the wind in order to produce electrical energy which is output to the local grid. The idle wind turbines may then consume or receive some of the power provided by the non-idle wind turbines. Due to the rational selection of the wind turbines it may be ensured that the local grid has a relatively stable voltage and/or frequency such that it may be avoided that the local grid collapses.

Thus, embodiments of the present invention address the selection of wind turbines used for providing electric energy to a microgrid or a local grid. The local grid or microgrid may be characterised by being supplied by a few energy sources that always need to keep a balance between energy production and consumption. If that balance is not achieved, then the local grid or microgrid may collapse due to frequency runaway, which may be avoided according to embodiments of the present invention.

Wind turbines may periodically need to stop for example for lubrication (providing lubricant) of the pitch system or to untwist the tower cable. The pitch lubrication is an example of an operation where the wind turbine stops to take an action to prevent unnecessary wear of the pitch bearing and the untwisting of the power cable is an example of an operation where the turbine stops to perform an action that prevents a mechanical component of exceeding its operation range. Those types of stops are also referred to as a periodic service stop.

The closeness to the respective temporary stop requirements may respect the periodic service stops needed to be performed by the different wind turbines. For example, if the next service stop of a particular wind turbine is relatively soon, the closeness will have for example a low value. In the other situation when the periodic stop is at a point in time relatively far away in the future, the closeness may have a relatively high value for this wind turbine. In other embodiments, the closeness may respect one or more other temporary stop requirements which may be measured in different physical quantities. The closeness may combine different temporary stop requirements of different components or portions of the wind turbine in one quantity, in particular a closeness score or a closeness level.

According to embodiments of the present invention, a conventionally observed risk can be avoided when a wind turbine stops for a periodic service stop which requires to stop electric power supply to the local grid. In this conventional scenario, the balance between power production and power consumption within the microgrid or local grid may not be longer maintained by the remaining power producing wind turbines in the island.

According to an embodiment of the present invention, the method further comprises at least one of operating non-selected wind turbines, if any, in an idle-state thereby not suppling power to the local grid; and receiving power from the local grid at at least one of the idle wind turbines.

The non-selected wind turbines may be commanded to operate in the idle state, since they may be known to be not reliable power producing wind turbines since they may require temporary stop relatively urgently (at least compared to the selected wind turbines which are entering the non-idle state). The idle wind turbines may then receive power from the local grid, in order to actually allow performing the required temporary stop and/or to secure a reliable and safe operation even in the idle state.

According to an embodiment of the present invention, selecting one or more of the wind turbines comprises selecting one or more of the wind turbines whose closeness to the respective temporary stop requirement is greatest or greater than a threshold, the threshold in particular depending on a wind speed and/or total number of wind turbines.

When the closeness is relatively great or greater than a threshold, the urgency for a temporary stop may be relatively low. Thus, basing the selection on the closeness being relatively great or greater than a threshold, may ensure that the selected wind turbines in fact are capable of producing power for a considerable time range in order to supply the power to the local grid, thereby improving stability of the local grid.

According to an embodiment of the present invention, selecting one or more of the wind turbines comprises selecting a number of one or more of the wind turbines such that electrical power production supplied by the non-idle wind turbines and electrical power consumption by the idle wind turbines is substantially balanced within the local grid, wherein in particular the minimum number of wind turbines supplying power to the local grid might depend on wind speed.

The aforementioned threshold may in embodiments also depend on the power requirement within the local grid and may in particular depend on the number of total wind turbines and also may depend on the wind speed. For example, so many wind turbines may be selected for entering the non-idle state in order to produce electrical power, such that the produced electrical power is sufficient, depending on the actual wind speed, in order to satisfy the power requirements of the idle wind turbines.

The selection may be updated in a regular or periodic or continuous manner. The method may for example also involve monitoring the total amount of produced power and supplied to the microgrid and also the total amount of power consumed by the idle wind turbines and/or also the non-idle wind turbines. In this respect, the wind turbines may also provide measurement data regarding power output or power consumption to a control portion which for example performs the selection step and also sends out control signals to the wind turbines.

According to an embodiment of the present invention, the method further comprises determining, for each of the wind turbines, a closeness level and/or closeness score based on respective the temporary stop requirement; selecting one or more of the wind turbines based on the closeness level, wherein the closeness level is a binary quantity or is quantized in more than two values, in particular in a continuous manner.

The closeness level and/or closeness score may indicate how close the respective wind turbine is to a temporary stop requirement. The level or score may be provided in a physical unit, such as time, or may be provided as a quantity without a unit. In a very simple embodiment, the closeness level may have only two possible values which may simplify the method. However, it may be advantageous to determine a closeness level having more than two possible values in order to have more flexibility and priority regarding the number of wind turbines which may be selected. The closeness level may allow to determine a ranked order of the wind turbines regarding service maintenance requirement.

According to an embodiment of the present invention, the closeness score respects a weighting of several components or wind turbines regarding predictability and/or importance and/or vulnerability.

The weighting may allow to prioritize one component or a service requirement of one component compared to another component. Further, some of the temporary stops may be less important and/or predictable than other temporary stops. This may also be captured within the closeness score or closeness level. Thereby, great flexibility may be provided and respecting plural temporary stops of plural components of the wind turbines.

According to an embodiment of the present invention, the method further comprises at least one of establishing a ranked order of the wind turbines based on the closeness level of the wind turbines; selecting wind turbines to enter the non-idle state based on the ranked order; choosing wind turbines to enter the idle state and/or to perform maintenance based on the ranked order.

The ranked order may advantageously be used for selecting those wind turbines which should enter the non-idle state and/or choosing those wind turbines which are to enter an idle state. For example, when the ranked order is from low closeness score to high closeness score, the wind turbines ordered at an end portion or e.g. end half of the ordered list may be selected to enter the non-idle state and the wind turbines in the beginning portion may be selected to enter the idle state. Thereby, the selection may be simplified.

According to an embodiment of the present invention, the closeness level of the temporary stop requirement is based on or is determined based on at least one of a remaining time duration until a next temporary stop of at least one component will be required; an elapsed time since a previous temporary stop of at least one component was performed; a remaining load level at least one component can be subjected to in the future; an accumulated load level at least one component was subjected to (in the past); an amount of degrees of rotation the nacelle was rotated, since a previous untwist operation; an amount of degrees of rotation the nacelle can be rotated in the future, until a next untwist operation will be required, wherein the closeness level respects in particular at least one operation threshold, in particular operation time threshold and/or wear level threshold.

Thereby, a great flexibility is provided for determining the closeness level. Other criteria may be respected as well.

According to an embodiment of the present invention, monitoring the wind turbines regarding at least one temporary stop requirement comprises at least one of: receiving measurement data regarding an operation state and/or performance and/or lifetime of at least one wind turbine component; receiving at least one operation threshold regarding operation of the component; determining the closeness level based on the measurement data and/or the operation threshold.

The measurement data may for example be provided by wind turbine sensors installed at one or more locations at one or more components of the wind turbine. The operation thresholds may be taken from for example an electronic storage comprised in the wind turbine or may be taken from a central storage holding configuration and design data for the wind turbines.

Thereby, the particular configuration of the wind turbine may be respected and in particular operation thresholds may be met.

According to an embodiment of the present invention, the temporary stop includes at least one of lubrication of at least one component of the wind turbine, in particular a gear system and/or a pitching system and/or a yawing system; untwisting a power cable, in particular arranged in a wind turbine tower; stopping the wind turbine; performing temporary stop on at least one component of the wind turbine.

According to an embodiment of the present invention, the temporary stop includes at least a temperature measurement of a component or fluid in the turbine, in particular the hydraulic oil temperature that needs to be within an operational range defined by an upper and lower temperature value. The distance is the minimum absolute difference between the measured or estimated temperature and the boundaries of the operational range.

According to an embodiment of the present invention, the method further comprises at least one of, in particular if the local grid is electrically stable: performing temporary stop for at least one idle wind turbine, in particular in a ranked order giving priority to those that having smallest closeness level; updating the closeness level of the idle wind turbine after having performed the temporary stop, in particular updating the rank of the wind turbine in the ordered list, wherein performing the temporary stop of a wind turbine in particular increases the closeness level, thereby lowering urgency level for temporary stop of the respective wind turbine.

Thereby, conventionally performed temporary stops are supported by embodiments of the present invention. When the temporary stop is actually performed at least for one or more of the idle wind turbines, they may be prepared for supplying power to the local grid after having being started. For example, the selection step may be updated upon performing any temporary stop of any of the idle wind turbines. It may then turn out that the previously idle wind turbine now, after the temporary stop is completed, will be selected as a wind turbine which should enter a non-idle state, in order to supply electrical power to the local grid. In the meantime, one of the previously selected wind turbines which had actually supplied electrical power to the local grid may have a lower closeness score or level than previously and this wind turbine(s) may then be selected to enter an idle state.

Thus, the wind turbines which are commanded to produce electrical power and provided to the local grid may dynamically be determined such that the electrical stability of the local grid may be ensured.

According to an embodiment of the present invention, the method further comprises at least one of, in particular in a regular manner updating closeness level of the wind turbines; updating selection of the wind turbines to enter non-idle state; supplying power to the local grid by wind turbines according to updated selection and/or updated closeness level; performing temporary stop of idle wind turbines based on the updated closeness level.

Thereby, changing capabilities of the wind turbines regarding supplying reliable power to the local grid may be monitored or observed or detected.

Entering the non-idle state may involve to operate the yaw system and/or the pitch system in order to direct the wind turbine towards the wind and also appropriately adjust the pitch angle of the rotor blades in order to effectively capture the wind power. The local grid connected wind turbines may in an initial situation be in an idle state, for example, or some wind turbines may already be in a non-idle state supplying power to the grid. Then, a dynamic selection of wind turbines based on the closeness obtained from the temporary stop requirement may be performed.

According to an embodiment of the present invention, the plural wind turbines comprise one of two or more wind turbines; a subset of wind park wind turbines; all wind turbines of a wind park; and/or wherein the idle-state of wind turbine includes at least one of wind turbine is stopped; rotor is slowly rotating; wind turbine does not supply power to the local grid; and/or the closeness level indicates at least one of a "distance" to a next temporary stop; an urgency level for performing a temporary stop. Thereby, the method may be flexibly applied to any group of wind turbines.

It should be understood, that features, individually or in any combination, disclosed, explained, provided or applied to a method of operating plural wind turbines connected to a local grid but isolated from any power providing utility grid, may, individually or in any combination, also apply to or provided for an arrangement for operating plural wind turbines according to embodiments of the present invention and vice versa.

According to an embodiment of the present invention it is provided an arrangement for operating plural wind turbines connected to a local grid but disconnected from a utility grid, the arrangement comprising: an input port for receiving monitoring data of the wind turbines regarding at least one temporary stop requirement; a processor adapted to select one or more of the wind turbines based on a closeness to the respective temporary stop requirement; an output port for supplying a control signal to at least one selected wind turbine or to at least one non-selected wind turbine, to enter a non-idle state thereby suppling power to the local grid.

The arrangement may be implemented in software and/or hardware. The arrangement may in particular be a portion of a control unit, in particular a park controller or a controller for at least controlling a subset of wind turbines of a wind park. The monitoring data may be received from the wind turbines and the control signals may also be supplied to the wind turbines. The wind turbines may either by themselves capable to calculate the closeness or the closeness level or may provide raw data to the control unit which by its own may calculate from the monitoring data and potentially other configuration data or operational limit data the respective closeness, in particular closeness level.

According to an embodiment it is provided a system, comprising: at least two wind turbines connected to a local isolated grid, in particular a wind park; an arrangement according to the preceding embodiment communicatively connected to the wind turbines.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a system according to an embodiment of the present invention;
Fig. 2 illustrates an example of a method scheme according to an embodiment of the present invention.

### Detailed Description

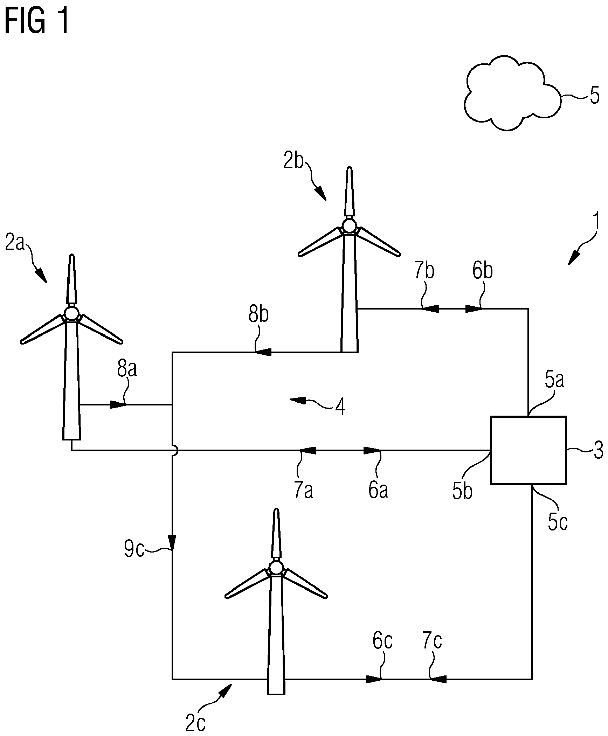

The system 1 schematically illustrated in **Fig. 1** comprises at least two wind turbines 2a, 2b, 2c, which may potentially with other wind turbines form a wind park or a subset of wind turbines of a wind park. Furthermore, the system 1 comprises an arrangement 3 according to an embodiment of the present invention for operating the plural wind turbines 2a, 2b, 2c which are connected with each other in a local grid 4 but which are disconnected from a utility grid 5. Thus, the wind turbines 2a, 2b, 2c are isolated from the utility grid 5 and thereby form an island. The local grid 4 may comprise one or more breakers which may allow to connect the different wind turbines 2a, 2b, 2c with each other and may comprise electronic components like cables, capacitors, resistors, breakers, transformers and the like.

The arrangement 3 comprises an input/output port 5a, 5b, 5c which is for receiving monitoring data 6a, 6b, 6c from the respective wind turbines 2a, 2b, 3c regarding at least one temporary stop requirement.

Furthermore, the arrangement 3 comprises a not in detail illustrated processor adapted to select one or more of the wind turbines based on a closeness to the respective temporary stop requirement.

Via the input/output ports 5a, 5b, 5c, the arrangement 3 supplies respective control signals 7a, 7b, 7c to the respective wind turbines in order to command the wind turbines to enter a non-idle state or an idle state. The arrangement selects one or more wind turbines to enter the non-idle state and sends a respective control signal to enter the non-idle state. To other wind turbines, the arrangement 3 may provide the respective control signal to enter or remain in an idle state.

The arrangement 3 is capable together with the wind turbines 2a, 2b, 2c to perform a method of operating plural wind turbines according to an embodiment of the present invention. Thereby, the method comprises to monitor the wind turbines 2a, 2b, 2c regarding at least one temporary stop requirement, wherein in the illustrated embodiment, the monitoring data 6a, 6b, 6c are obtained at the arrangement 3 from the respective wind turbines 2a, 2b, 2c. Then, the arrangement 3 selects one or more of the wind turbines based on a closeness to the respective temporary stop requirement (in particular derived based on the monitoring data 6a, 6b, 6c). Upon receiving the control signals 7a, 7b, 7c as supplied from the arrangement 3, the selected wind turbine(s) or the non-selected wind turbine(s) then enters a non-idle state thereby supplying power to the local grid. Supplying power can be understood as (one or) both active power for frequency support, and/or reactive power for ramping up the voltage or supporting an existing voltage in the local grid.

According to one embodiment, for example, the wind turbines 2a and 2b are selected to enter the non-idle state in order to provide power 8a, 8b into the microgrid or local grid 4. The wind turbine 2c has not been selected but remains in the idle state. For remaining in the idle state, however, the wind turbine 2c requires also electrical power 9c which is received from the local grid 4 which is powered by the wind turbines 2a, 2b.

The number of wind turbines, in the illustrated example 2, is selected such that the electrical power production supplied by the non-idle wind turbines 2a, 2b and the electrical power consumption by the idle wind turbine 2c is substantially balanced within the local grid 4.

The arrangement 3 may determine a closeness level or closeness score for the different wind turbines 2a, 2b, 2c based on the received monitoring data 6a, 6b, 6c. Using the closeness level, the wind turbines 2a, 2b, 2c may be set in a ranked order and the selection may be based on the ranked order. The wind turbine 2c which is in the idle state may then receive a temporary stop, such as lubrication of a gear system or a pitching system or a yawing system or an untwisting operation of a power cable.

Then, the monitoring data are updated and also the selection of wind turbines may be updated to define and command those which have a relatively high closeness score to enter or remain in the non-idle state for supplying electric energy and power to the local grid 4.

According to an embodiment of the present invention, the wind turbines calculate "how far" they are from needing to stop for one of the reasons mentioned above, i.e. to perform a temporary stop in particular involving a periodic service stop. The measure of how far they are from needing a stop may depend upon the threshold of an operation limit which is required to be avoided. This threshold may for example be an estimate in terms of time (hours, minutes) or an estimate in terms of degrees rotation before untwisting is needed.

On the site level, the park controller (an example of an implementation of the arrangement 3) may select the wind turbines that are farthest away from having to do a periodic service stop to reduce the risk of one of them impacting the operation of the small grid. Further, when the operation of the small grid is stable (in an electrical sense), the park controller or arrangement 3 may instruct the idling turbine(s) to increase their distance to the service stop condition. Thus, these wind turbines may in fact perform a temporary stop action. If one of the wind turbines which are non-idle (i.e. producing and supplying power to the local grid 4) is getting close to a stop condition, then the park controller or the arrangement 3 may start the idling turbine with the largest distance to its stop condition. Once that turbine has been started, the turbine with the shorter distance to the stop conditions may be stopped so entering an idle state.

The active power used for increasing the idling turbines distance to a service stop is free as it is provided by the turbines in operation, i.e. the non-idling wind turbines. Increasing the distance to a service stop while in the island mode may tend to have a positive effect on the energy produced when connected to the electrical grid. The reason may be that the distance to the service stop could reduce the number of service stops a turbine has to do when connected to the local grid 4 allowing it to produce more active power.

The number of turbines needed to maintain the power island (in particular those which are in the non-idle state) may likely depend on the wind speed on the site and the number of turbines that can increase that distance to a service stop will likely also be wind speed dependent.

Embodiments of the present invention provide a proactive role in always monitoring the operating turbine's distance to service stops and when they are close, the idling turbines with the largest distance to the service stop may be started. Further, it may increase/optimize the idling turbines distance to the service stop. Thereby, the risk of operational turbines performing an unwanted service stop may be reduced or even avoided.

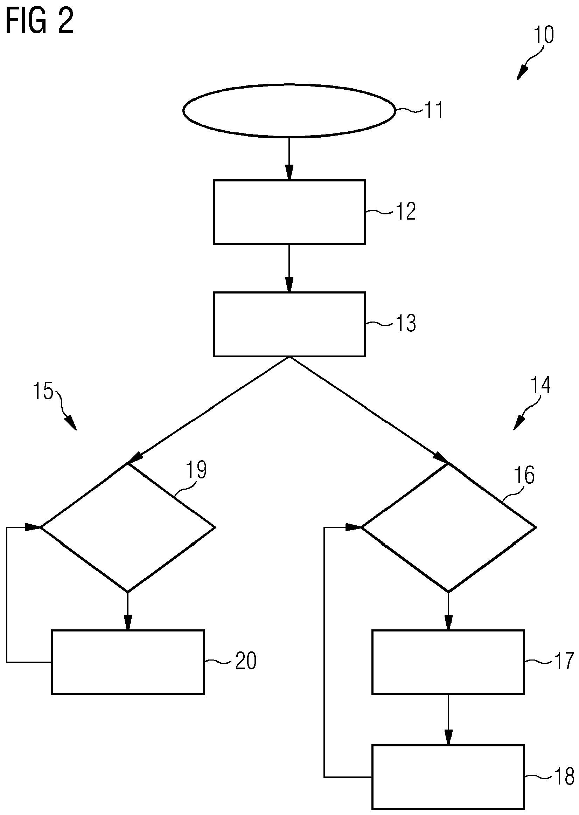

**Fig. 2** illustrates a method scheme 10 according to an embodiment of the present invention. The method is started at a start box 11. In a method step 12, N-turbines (N being an integer) are picked which have the largest distance to a service stop. In a method step 13, there is a waiting period for the local grid 4 to be stable in an electrical sense. In this waiting period, the picked N-turbines (or at least one turbine) supplies power to the local grid 4.

From method step 13, the method branches in two branches 14 and 15. In the branch 14 in an evaluation block 16it is checked whether an operational turbine (i.e. a non-idle wind turbine) is too close to a service stop. If the check is asserted, it is switched to the method step 17 in which the idling turbine(s) with the largest distance to the service stop is started. In a next method step 18, once the turbine is started, the turbine with the closest distance is stopped and is instructed to increase the distance to the service stop (for example by performing a temporary stop action). From method step 18 it is switched back to the evaluation block 16.

In the second branch 15, an evaluation block 19 evaluates if the idle wind turbine(s) is close to the service stop. If this is the case, it is switched to the method block 20. In method step 20, x (x being an integer) wind turbines having the smallest distance to the service stop are instructed to increase the distance to the service stop, for example by performing one or more temporary stop operations. In method step 20 it is switched back to the evaluation block 19.

The method scheme 10 illustrated in Fig. 2 is only an example of a particular embodiment of the present invention. According to other embodiments, one or more of the method steps illustrated in Fig. 2 may be omitted.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of operating plural wind turbines (2a,2b,2c) connected to a local grid (4) but isolated from any power providing utility grid (5), the method comprising:
monitoring (6a,6b,6c) the wind turbines (2a,2b,2c) regarding at least one temporary stop requirement;
selecting one or more of the wind turbines (2a,2b,2c) based on a closeness to the respective temporary stop requirement, in particular the lower the closeness the more urgent the temporary stop;
entering, by at least one selected wind turbine (2a,2b) or by at least one non-selected wind turbine, a non-idle state thereby suppling power to the local grid.

2. Method according to the preceding claim, further comprising at least one of:
establishing a ranked order of the wind turbines (2a,2b,2c) based on the closeness, in particular a closeness level, of the wind turbines;
selecting wind turbines (2a,2b) to enter the non-idle state based on the ranked order;
choosing wind turbines (2c) to enter the idle state and/or to perform maintenance based on the ranked order.

3. Method according to one of the preceding claims, further comprising at least one of:
operating non-selected wind turbines (2c), if any, in an idle-state thereby not suppling power to the local grid; and
receiving power (9c) from the local grid (4) at at least one of the idle wind turbines (2c).

4. Method according to one of the preceding claims, wherein selecting one or more of the wind turbines (2a,2b,2c) comprises:
selecting one or more of the wind turbines (2a,2b) whose closeness to the respective temporary stop requirement is greatest or greater than a threshold, the threshold in particular depending on a wind speed and/or total number of wind turbines.

5. Method according to one of the preceding claims, wherein selecting one or more of the wind turbines (2a,2b,2c) comprises:
selecting a number of one or more of the wind turbines (2a,2b,2c) such that electrical power production supplied by the non-idle wind turbines (2a,2b) and electrical power consumption by the idle wind turbines (2c) is substantially balanced within the local grid (4),
wherein in particular the number of wind turbines supplying power to the local grid depends on wind speed.

6. Method according to one of the preceding claims, further comprising:
determining, for each of the wind turbines (2a,2b,2c), a closeness level and/or closeness score based on respective the temporary stop requirement;
selecting one or more of the wind turbines (2a,2b,2c) based on the closeness level; and/or
establishing a ranked order of the wind turbines (2a,2b,2c) based on the closeness level, of the wind turbines,
wherein the closeness level is a binary quantity or is quantized in more than two values, in particular in a continuous manner.

7. Method according to the preceding claim, wherein the closeness score or closeness level respects a weighting of several components or wind turbines regarding predictability and/or importance and/or vulnerability.

8. Method according to one of the two preceding claims, wherein the closeness level of the temporary stop requirement is based on or is determined based on at least one of:
a remaining time duration until a next temporary stop of at least one component will be required;
an elapsed time since a previous temporary stop of at least one component was performed;
a remaining load level at least one component can be subjected to in the future;
an accumulated load level at least one component was subjected to (in the past);
an amount of degrees of rotation the nacelle was rotated, since a previous untwist operation;
an amount of degrees of rotation the nacelle can be rotated in the future, until a next untwist operation will be required,
wherein the closeness level respects in particular at least one operation threshold,
in particular operation time threshold and/or wear level threshold.

9. Method according to one of the preceding claims, wherein monitoring the wind turbines (2a,2b,2c) regarding at least one temporary stop requirement comprises at least one of:
receiving measurement data regarding an operation state and/or performance and/or lifetime of at least one wind turbine component;
receiving at least one operation threshold regarding operation of the component;
determining the closeness level based on the measurement data and/or the operation threshold.

10. Method according to one of the preceding claims, wherein the temporary stop includes at least one of:
lubrication of at least one component of the wind turbine, in particular a gear system and/or a pitching system and/or a yawing system;
untwisting a power cable, in particular arranged in a wind turbine tower;
stopping the wind turbine;
performing temporary stop on at least one component of the wind turbine.

11. Method according to one of the preceding claims, further comprising at least one of, in particular if the local grid is electrically stable:
performing temporary stop for at least one idle wind turbine (2c), in particular in a ranked order giving priority to those that having smallest closeness level;
updating the closeness level of the idle wind turbine (2c) after having performed the temporary stop, in particular updating the rank of the wind turbine in the ordered list, wherein performing the temporary stop of a wind turbine in particular increases the closeness level, thereby lowering urgency level for temporary stop of the respective wind turbine.

12. Method according to one of the preceding claims, further comprising at least one of, in particular in a regular manner:
updating closeness level of the wind turbines (2a,2b,2c);
updating selection of the wind turbines (2a,2b,2c) to enter non-idle state;
supplying power (8a, 8b) to the local grid (4) by wind turbines according to updated selection and/or updated closeness level;
performing temporary stop of at least one idle wind turbine (2c) based on the updated closeness level.

13. Method according to one of the preceding claims,
wherein the plural wind turbines (2a,2b,2c) comprise one of:
two or more wind turbines;
a subset of wind park wind turbines;
all wind turbines of a wind park;
and/or
wherein the idle-state of wind turbine includes at least one of:
wind turbine is stopped;
rotor is slowly rotating;
wind turbine does not supply power to the local grid;
and/or
the closeness level indicates at least one of:
a "distance" to a next temporary stop;
an urgency level for performing a temporary stop.

14. Arrangement (3) for operating plural wind turbines (2a,2b,2c) connected to a local grid (4) but disconnected from a utility grid (5), the arrangement comprising:
an input port (5a,5b,5c) for receiving monitoring data (6a,6b,6c) of the wind turbines regarding at least one temporary stop requirement;
a processor adapted to select one or more of the wind turbines based on a closeness to the respective temporary stop requirement;
an output port (5a,5b,5c) for supplying a control signal (7a,7b,7c) to at least one selected wind turbine or to at least one non-selected wind turbine, to enter a non-idle state thereby suppling power to the local grid.

15. System (1), comprising:
at least two wind turbines (2a,2b,2c) connected to a local isolated grid (4), in particular a wind park;
an arrangement (3) according to the preceding claim communicatively connected to the wind turbines (2a,2b,2c).
